(19) **Europäisches Patentamt / European Patent Office / Office européen des brevets**

(11) **EP 4 294 195 B1**

(12) **EUROPEAN PATENT SPECIFICATION**

(45) Date of publication and mention
of the grant of the patent:
**19.03.2025 Bulletin 2025/12**

(51) International Patent Classification (IPC):
*A23C 19/082* (2006.01)    *A23J 3/10* (2006.01)
*A23J 3/22* (2006.01)    *A23J 3/28* (2006.01)
*A23L 29/256* (2016.01)

(21) Application number: **22709418.2**

(22) Date of filing: **22.02.2022**

(52) Cooperative Patent Classification (CPC):
**A23J 3/227; A23C 19/082; A23J 3/10; A23J 3/285;**
**A23L 29/256;** A23L 33/16; A23L 33/19; A23L 33/21

(86) International application number:
**PCT/NL2022/050098**

(87) International publication number:
**WO 2022/177439 (25.08.2022 Gazette 2022/34)**

(54) **MILK-PROTEIN BASED MEAT SUBSTITUTE**

AUF MILCHPROTEIN BASIERENDER FLEISCHERSATZ

SUBSTITUT DE VIANDE À BASE DE PROTÉINES DE LAIT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **22.02.2021 EP 21158351**

(43) Date of publication of application:
**27.12.2023 Bulletin 2023/52**

(73) Proprietor: **Dairy Protein Cooperation Food B.V.**
**2411 HS Bodegraven (NL)**

(72) Inventor: **LAVRIJSEN, Bas Willem Maarten**
**2411 HS Bodegraven (NL)**

(74) Representative: **V.O.**
**P.O. Box 87930**
**2508 DH Den Haag (NL)**

(56) References cited:
EP-A1- 1 759 593    EP-A2- 0 174 192
EP-B1- 1 771 085    WO-A1-2020/226501
AU-B2- 2008 200 828    SE-B- 375 227
US-A1- 2011 171 359    US-A1- 2015 351 427
US-A1- 2020 029 590    US-A1- 2020 323 230

• THANGAVELU KARTHIKEYAN P ET AL: "Novel processing technologies and ingredient strategies for the reduction of phosphate additives in processed meat", TRENDS IN FOOD SCIENCE AND TECHNOLOGY, ELSEVIER SCIENCE PUBLISHERS, GB, vol. 94, 11 October 2019 (2019-10-11), pages 43 - 53, XP085906714, ISSN: 0924-2244, [retrieved on 20191011], DOI: 10.1016/J.TIFS.2019.10.001

## Description

### Field

The invention relates to the production of meat-replacement products on the basis of the formation of a fibrous composition from milk proteins with alginate.

### Background

A process of the aforementioned type is disclosed in WO 03/061400. Herein milk protein is separated from milk serum (whey) by initially subjecting milk to a cheese-making process, resulting in the formation of curd. The curd is converted into a finely distributed form, and mixed with a calcium-complexing agent (typically phosphate salts, such as typically used as emulsifying salts in making processed cheese), resulting in the formation of a homogenous mass. To this mass a hydrocolloid capable of precipitating with metal cations is added, typically an alginate. A fibrous product is then formed by adding a solution of at least divalent metal ions (typically calcium ions). This prompts the hydrocolloid to start precipitating with said ions, which results in the formation of a fibrous product, which has a meat substitute structure. Variants of this process have been described in EP1588626, EP1643850, EP1643851, EP1771085, US 2015/0351427, SE375227, US 2011/171359, EP1759593, and AU2008200828.

Whilst resulting in a suitable meat-replacement, the known process has several drawbacks. One such drawback is the relatively high amount of salts, such as emulsifying salts and added calcium for cheesemaking , that are needed. This goes against the current tendency, as generally stimulated by health authorities in many countries, to reduce the amounts of salt in food products.

In the above process, the emulsifying salts are needed to remove calcium from the cheese matrix that forms the curd, so as to transfer the curd into a homogenous liquid mass from which fibres can be formed. This concerns not only calcium that is naturally present in milk, but also calcium that is added prior to curd formation. These salts are also necessary to bind calcium prior to the addition of the hydrocolloid. Otherwise, the hydrocolloid will untimely precipitate with calcium ions present. This does not result in the formation of a fibrous structure, or at least not in the formation of fibres having an adequate length to be perceived as meat-like. Rather, the process should allow the precipitation of hydrocolloid with cations to occur in such a manner that such precipitation will result in the formation of a fibrous product. In the aforementioned EP1588626 and EP1643851 some alternative starting materials are described, viz. sodium caseinate, whey protein concentrate, and skimmed milk powder. In EP 1588626 it is claimed that with these materials, the addition of a phosphate material to capture free calcium ions, could be dispensed with. In fact, the same text is found in the interrelated background patent applications WO 2005/004624, WO 2005/004623, and WO 03/061400. No results of fiber formation are given, and in practice premature precipitation does in fact occur.

### Summary

The invention seeks to provide, *inter alia,* a process as above, yet wherein at least part of the emulsifying salts can be dispensed with.

To this end the invention provides, in one aspect, a process for the preparation of a fibrous composition comprising:

> (i) providing a casein-containing milk-based liquid;
> (ii) subjecting said liquid to a calcium ions-binding treatment, thereby forming a free calcium ions-depleted liquid;
> (iii) adding to the free calcium ions-depleted liquid a hydrocolloid capable of precipitating with metal cations, thereby forming a fibre-generation liquid mass;
> (iv) contacting the fibre-generation liquid mass with an aqueous solution comprising at least divalent metal cations so as to form fibres,

wherein the casein-containing milk-based liquid is a micellar casein concentrate.

In some aspects,. the invention provides a process for the preparation of a fibrous composition by providing a liquid mass comprising milk proteins, a calcium-ions binding agent, and a hydrocolloid capable of precipitating with metal cations, and contacting the mass with an aqueous solution comprising at least divalent metal cations so as to form fibres, wherein the liquid mass is a casein-containing milk-based liquid selected from the group consisting of dissolved casein powder obtained from subjecting milk to microfiltration, a retentate obtained by subjecting milk to microfiltration, and mixtures thereof.

In another aspect, the invention presents a fibrous composition obtainable by a process according to the preceding paragraph.

In yet another aspect, the invention provides a fibrous composition as defined in the preceding paragraph, comprising an excess amount of hydrocolloid not involved in the formation of fibres. The invention is defined by the appended set of claims.

**Detailed description**

The process of the invention serves to produce a composition having a fibrous structure, wherein the fibres comprises a precipitated hydrocolloid enclosing available milk components including casein. Hereinafter this composition is briefly referred to as a fibrous composition.

In the process as disclosed herein, the casein is provided in the form of a casein-containing milk-based liquid which is a micellar casein concentrate. The term "micellar casein concentrate" notifies that casein is present in its native, micellar form in which it is present in milk, yet in a higher concentration calculated on the basis of dry matter solids content. Milk generally has a milk protein content of 3.5 wt.%, approximately 80 wt.% of which is micellar casein,. Taking into account that milk has a dry matter solids content of 12-13 wt.%, the concentration of micellar casein in milk, calculated on the basis of dry matter solids, is generally approximately 21-23 wt.%. It will be understood that a micellar casein concentrate will thus have a micellar casein concentration, based on dry matter solids content of at least 25 wt.%, such as at least 30 wt.%, such as at least 40 wt.%, preferably at least 50 wt.%, more preferably at least 60 wt.% such as at least 70 wt.%,

Generally, the casein-containing milk-based liquid, being a micellar casein concentrate, is selected from the group consisting of a retentate obtained by subjecting milk to ultrafiltration (UF), a retentate obtained by subjecting milk to microfiltration (MF), and mixtures thereof. Herein the retentates as mentioned refer to either the retentate as obtained in the UF, respectively MF process as such, or a reconstituted liquid made from adding water to a dried, typically powdered, UF or MF retentate.

Without wishing to be bound by theory, the inventors believe that the suitability of the aforementioned selected casein containing milk-based liquids, can be attributed to the fact that UF and MF retentates comprise casein in its native micellar form, other than in the event of curd, cheese, or caseinate salts.

As indicated above, a fibre-generation liquid mass should contain a hydrocolloid that is capable of precipitating with metal cations. Thereby it is desired to allow controlled, fibre-forming precipitation by the subsequent addition of an aqueous solution comprising at least divalent metal cations. In order for a milk-based liquid to have this ability, free calcium ions present in the liquid are bound or complexed, in order to prevent the premature precipitation of the hydrocolloid, i.e., before the contacting step with the aqueous solution comprising divalent metal cations. In accordance with the invention, this is accomplished by a treatment step in which either a calcium-binding (calcium-complexing) agent is added, or a native milk-based agent is made available..

The known process to make a fibrous meat replacement from milk protein, proceeds via a cheese making process, up to the formation of curd. Without wishing to be bound by theory, the inventors believe that the known process results in first making a cheese matrix with binding calcium-salts (viz., curd) and then breaking up the same cheese matrix by adding emulsifying salts. The invention is based on the judicious insight to avoid the unnecessary production of curd, and thus no longer necessitate the addition of emulsifying salts a, which in the prior art process is indispensable.

This is accomplished, according to the invention, by providing a different route to the liquid mixture which is eventually subjected to formation of a fibrous mass.

Accordingly, the casein-containing milk-based liquid is selected from the group consisting of dissolved milk protein powder obtained from subjecting milk to ultrafiltration, a retentate obtained by subjecting milk to ultrafiltration, dissolved casein powder obtained from subjecting milk to microfiltration, a retentate obtained by subjecting milk to microfiltration, and mixtures thereof.

Both microfiltration (MF) and ultrafiltration (UF) of milk as such are known in the field. The skilled person is aware of the applicable equipment and membrane (filter) sizes. Generally, UF removes water and lactose as a filtrate, with casein as well as whey protein retained in the UF retentate. In the event of microfiltration, also whey protein is removed with the filtrate.

The liquid mixture that is subjected to fibre-formation, comprises casein and a hydrocolloid capable of precipitating with metal cations. In the process of the invention this liquid mixture can be obtained in a relatively simple two-step process.

The first step is subjecting milk to ultrafiltration (UF) or microfiltration (MF). This results in a filtrate comprising water soluble components such as lactose and salts. In the case of MF also whey proteins are removed with the filtrate. As a result, a retentate is obtained that in the event of UF comprises the protein fraction of the milk, and in the event of MF specifically the casein fraction of the milk.

The retentate typically has a dry matter solids content of 10-40 wt.%, such as 15-25 wt.%, typically 18-22 wt.% such as 20 wt.%, and is a relatively thick liquid mass.

Before starting the microfiltration, and preferably also when applying ultrafiltration, the milk is subjected to decreaming so as to provide skim milk. Such skim milk generally has a fat content of below 0.1 wt.%, such as 0.04 wt.% to 0.08 wt.%, typically about 0.06 wt.%. After the process of microfiltering skimmed milk, the retentate can be brought to a desired fat content. This fat content can range from 0% or, e.g., up 2.5 wt.%, in the event that a diet meat replacement (no fat or low fat) is desired. The fat content can also be high, such as 10 wt. to 15 wt.% in the event that a high fat (e.g. pork) meat replacement is desired. In an interesting embodiment, the fat content is brought within a range of 2.5 wt.% to 7.5 wt.%, such as 4-6 wt.%, typically around 5 wt.%. In such embodiments the product is typically suitable as a chicken-like meat replacement. Any type of fat, vegetable fat or cream, can be added. It will be understood that in the event that the product is intended for vegetarians, as a meat replacement, animal fat will not normally be used. Preferably, dairy fat (cream) is used.

The UF or the MF retentate can be used as such, or upon reconstitution of a powder obtained by drying such UF or MF retentate, typically by means of evaporation. Accordingly, the casein-containing milk-based liquid from which according to the present invention a fibrous composition is produced, is selected from the group consisting of dissolved casein powder obtained from subjecting milk to microfiltration, a retentate obtained by subjecting milk to microfiltration, and mixtures thereof. Unless indicated otherwise, the various embodiments and advantages of UF and MF retentate described hereinbefore and hereinafter, are equally applicable to the reconstituted form of the retentate.

The application of UF and MF retentate has significant process advantages as well. Thus, by presenting to the fibre-forming process a liquid from which water-soluble components have been removed in advance, a much lower loss of these components occurs in the fibre-forming process. This advantage is more pronounced when using MF retentate, since this does not substantially contain water soluble whey protein.

Accordingly, a product is obtained that is distinguished from the milk-protein based fibrous products known in the art, by having a lower salt content. The latter is provided by the lower amount of calcium as compared to particularly curd-based processes (which involve the addition of calcium) and by the absence of emulsifying salts. Also in comparison with fibrous products obtained from milk powder, the calcium content is lower, since part of the milk calcium is removed with the filtrate upon ultrafiltration or microfiltration.

In a preferred embodiment, the casein-containing milk-based liquid is selected from the group consisting of dissolved casein powder obtained from subjecting milk to microfiltration, a retentate obtained by subjecting milk to microfiltration, and mixtures thereof.

As such, the method of separating whey from casein by microfiltration is known. This is sometimes referred to as the cracking of milk. Cracking of milk as a technique is familiar to the skilled person. The applicable microfiltration membranes generally have a pore size in a range of from $0.05\mu m$ to $0.25pm$, preferably $0.1\mu m$ to $0.2pm$, preferably $0.1\mu m$.

In carrying out the microfiltration, equipment can be applied with which the person skilled in the art is well familiar. Microfiltration equipment can, e.g., be based on ceramic membranes (Pall, Tami, Atech), or. e.g., polymeric membranes, typically spiral wound polymeric membranes, with membrane housing and pumps conventional in the art. The microfiltration processes can be carried out at a range of temperatures, preferably at most 60°C, such as from 10°C to 60°C, e.g. 50°C to 55°C. Optionally, in addition to microfiltration, a step of diafiltration can be carried out so as to further wash out the obtained concentrate and decrease the whey protein content of the casein fraction.

The casein containing milk-based liquid can be obtained from milk produced by any dairy animal. This is mostly cattle, and particularly cow (adult female cattle), but in addition to cattle, the following animals provide milk used by humans for dairy products: camels, donkeys, goats, horses, reindeer, sheep, water buffalo, yaks, and moose. Most preferably, the milk used to provide a casein containing milk-based liquid as used in the process of the invention is cow's milk or goat's milk.

The second step is mixing the UF or MF retentate with a hydrocolloid capable of precipitating with divalent or polyvalent metal cations.

The skilled person is familiar with hydrocolloids that are capable of precipitating with divalent or polyvalent metal cations. Typically, the hydrocolloid is a polysaccharide, preferably selected from pectin with a low methoxyl group content (pectin generally comes in two grades, "high-methoxyl pectin" which generally requires a significant amount of sugar to gel properly, and "low-methoxyl pectin" for which this does not hold), gellan gum and alginate. A preferred type of calcium-reactive alginate is that of obtained from "Brown algae". The amount of alginate can vary, depending on the desired length of fibres in the fibrous composition, and the desired toughness of the fibres. Generally a range of 0.5 wt.% to 5 wt.% will be applied, such as 1-4 wt.5, preferably 2-3 wt.%. Preferably a so-called liquiverter is used for mixing the alginate-powder with water to a liquid mass, i.e., mixing equipment in which mixing takes place under conditions of high shear, resulting in mixing hydrocolloid and water by creating a strong vortex.

Typically, the mixing of the casein containing mass and the liquid alginate is conducted so as to obtain a homogenous mixture. If desired, an additional homogenization step can be conducted. The resulting liquid, homogenous mass comprises the two components that are essential to, subsequently, carry out a step of precipitation and formation of a fibrous mass. These components are casein, and the hydrocolloid. Various mixing or homogenizing equipment can be used, such as paddle mixers or a tumbler.

If a solution of a metal cation with a valency of at least 2 is added to the homogenous mixture in which there are substantially no longer free calcium ions and which contains complexes of milk protein material and a hydrocolloid which precipitates with metal cations of this type, a fibrous product will be obtained in a controlled way by stirring the mass gently (e.g. in a paddle-mixer) and, optionally after washing and removal of excess moisture, has a meat substitute structure. The precipitation of the fibres containing alginate and milk protein is effectuated using an aqueous solution comprising divalent or polyvalent metal cations. Typically, the solution comprises 1 to 10 wt.% of $CaCl_2$., such as 2.5 to 7.5 wt.%, preferably 3 to 5 wt.%, such as about 4 wt.%. In a preferred embodiment, per gram of hydrocolloid, such as per gram of alginate, an amount of dry $CaCl_2$ of 0.2 to 0.4 g of dry is used, such as 0.3 g $CaCl_2$ per gram of alginate. Other suitable salts generally are water-soluble divalent metal ions, such as magnesium acetate or calcium acetate.

It will be understood that, at this stage, the hydrocolloid should not exhibit a substantial untimely precipitation with di- or polyvalent cations as may be present. Such precipitation should occur, in a controlled manner, in the eventual step of forming a fibrous product, which will be discussed below.

To this end, the liquid mass comprises a calcium ions-binding agent, thus preventing such calcium ions to cause precipitation of the hydrocolloid, or at least ensuring that a sufficient amount of the hydrocolloid is retained in the liquid mixture, and is available for the actual precipitation step.

In the prior art process, the liquid, homogenous mass comprising casein and hydrocolloid, also comprises emulsifying salts. In such process, the amounts of emulsifying used, reflect their double purpose. One such purpose is, as discussed above, to prevent the untimely precipitation of the hydrocolloid. The other purpose, however, which in the prior art process is the overriding reason to add emulsifying salts, is to modify curd into a liquid mass, by removing calcium ions from the curd matrix.

The process of the invention does not involve the making, and subsequent breaking up, of a cheese matrix.

Accordingly, to the extent that emulsifying salts are added, these have one function only, viz. the aforementioned prevention of hydrocolloid precipitation. This is reflected in the amounts of any such emulsifying salts used.

The process of the invention thus results in a product comprising a lower amount of emulsifying salts than in accordance with the prior art process. Compared to making a fibrous product from curd, generally the amount of emulsifying salts can be reduced by at least 50%, such as by 75% to 99%, such as by 85% to 95% reduction. I.e., the amount of emulsifying salts need is generally in a range of 1% to 50%, such as 5% to 15% of the amount to be used when starting from curd.

In interesting further embodiments, the addition of such emulsifying salts is avoided altogether. This presents a further major departure from the process of the prior art. A key advantage is that a fibrous composition from milk protein can be obtained without emulsifying salts. This has health benefits, viz. a naturally lower amount of salts, as well as regulatory benefits, since no emulsifying salts need to be declared.

In one such embodiment, the calcium ions-complexing agent is an excess amount of the hydrocolloid. The excess amount will be chosen depending on the desired amount of hydrocolloid, particularly alginate, in the fibrous composition. By way of general guidance, the excess amount will be in a range of from 10 wt.% to 100 wt.%, as compared to the amount chosen in the event that calcium ions have been captured with emulsifying salts. The excess amount will generally be as high as needed, and preferably as low as possible. A high amount is preferred in the event that a composition having relatively tough fibres is desired, since alginate positively contributes to toughness. This is particularly suitable in the event that the composition is to be suitable for use in animal feed. Choosing an excess amount of alginate in the lower end is preferred in order to produce a fibrous compositions of improved palatability for humans. Typically, the excess amount of alginate is in a range of from 15 wt.% to 40% excess, such as 20 wt.% to 30 wt.% excess. In an embodiment, the resulting amount of alginate in the fibrous composition accordingly will range from 3 wt.% to 5 wt.%.

For the UF or MF retentate to be used in production (which can be a retentate as such or in a reconstituted form) and the hydrocolloid solution to be used in production (such as a 4 wt.% solution of an alginate) the excess amount can be determined in a simple lab test as follows. The test is conducted in a standard laboratory mixer. To this end a plurality of batches of 300 mL each of the retentate is provided. For each batch, the formation of fibres is tested in different runs, each with a different amount of hydrocolloid solution. The first run is conducted with an amount of 200 mL of hydrocolloid solution. This solution is added slowly at a rate of about 2 seconds per 100 mL. After addition of the full amount of hydrocolloid solution, the resulting mixture is gently stirred at a rate of 100 rpm. Then, with visual inspection, it is established whether fibres having a length greater than 5 mm are formed. If not, in a next run, the experiment is repeated with an amount of 400 mL of hydrocolloid solution. Further runs, if necessary, are done each time with a doubled amount of hydrocolloid solution, until two subsequent runs produce fibres having a length greater than 5 mm. If the first run (at 200 mL of hydrocolloid solution) results in fibres having a length greater than 5 mm, the second run will be at an amount of 100 mL. If this run also produces fibres having a length greater than 5 mm, the third run will be at an amount of 50 mL. Further runs, if applicable, are done with each time half of the previous amount of hydrocolloid solution, until a run is obtained in which no fibres having a length of greater than 5 mm are obtained. The excess amount of hydrocolloid is defined as at least the lowest amount at which in the test herein described fibres are formed of greater than 5 mm length.

In an interesting other embodiment, the calcium-complexing agent is such an agent as already present in milk. This typically refers to milk-based phosphates.

To this end, the UF or MF retentate is subjected to a treatment step that comprises increasing its temperature, thereby enabling native milk phosphate to capture free calcium ions.

Without wishing to be bound by theory, the inventors believe that this puts to use a phenomenon that during heating of milk, dissolved calcium and phosphate become supersaturated and partly associate with casein micelles. The additional colloidal phosphate so formed has a molar ratio Ca/P ≈ 1. The reaction is believed to be:

$$Ca^{2+} + H_2PO_4^- \rightarrow CaHPO_4 + H^+.$$

In an embodiment, said treatment step comprises increasing the temperature of the liquid to at least 60°C. Generally, the temperature will not be higher than 140°C. Typically, the maximum temperatures chosen reflect a temperature and time profile as used in the art as a sterilization step. Preferably, said treatment step comprises increasing the temperature to 65°C to 95°C, such as 80°C to 90°C.

Generally, the treatment is conducted for a duration of at least 2 minutes, such as at least 4 minutes, such as at least 6 minutes, e.g. 8 to 12 minutes, such as about 10 minutes. Generally, at the aforementioned temperatures, the maximum duration does not matter for the presence of calcium ions, once these have been in a captured state, they will remain so captured. It will be understood, that prolonged heating, if not strictly necessary for capturing free calcium ions, is preferably avoided, as prolonged heating may affect the appearance, and ultimately reduce the quality, of a milk-based liquid. Preferably, the treatment step therefore is conducted for at most 60 minutes, such as at most 30 minutes, preferably at most 15 minutes.

The skilled person will be able to straightforwardly test suitable treatment conditions if desired. This can be done by providing one or more samples of 100 mL of the milk-based liquid, increasing the temperature of each sample to a desired value for a desired period of time, and then adding an amount of 100 g of 4% alginate solution. Direct visual inspection will show whether or not immediately precipitation or even premature fibre-formation occurs. If no precipitation occurs, the fibre-generation liquid mass retains its smooth structure, indicating that the conditions chosen are suitable for preparing a fibrous composition by controlled addition of divalent salt solution.

As indicated above, the temperature as described is believed to result in dissolved calcium and phosphate become supersaturated and partly associate with casein micelles. It will be understood that this is based on a reversible process. I.e., if the temperature were allowed to drop to below 60°C, particularly below 50°C, captured calcium ions may become partly liberated again over time. Accordingly, in order to retain a calcium ions-depleted casein liquid, the temperature is preferably kept at or above 60°C when the hydrocolloid capable of precipitating with metal cations is added. Also the resulting homogenous fibre-generation liquid mass is kept at such a temperature at least until the step of contacting said mass with an aqueous solution comprising divalent or polyvalent metal cations. Another option is to cool down to maximum 30°C and precipitating the mass to fibrous structure sufficiently rapidly, preferably immediately, in order to stay ahead of the reversed process of liberation of calcium-ions.

It has been found that the formation of a fibrous structure can be further improved by an increase in pH to a value of at least 6.8. This pH increase can be conducted at any stage prior to adding the hydrocolloid. However, it is believed that a better effect of the pH increase is achieved by effecting this during, or before, the temperature-increasing step. Preferably, the pH increasing step is conducted during the temperature-increasing step, preferably at a temperature ranging from 7°C to 85°C, more preferably at a temperature ranging from 20°C to 40°C, such as at about 30°C.

Generally, the pH will not be increased to a value higher than 9. Preferably, the pH-increasing step comprises increasing the pH to a value in a range of from 7.0 to 8.0, such as 7.2 to 7.4.

Increasing pH is generally accomplished by adding a base. It will be understood that it is not advisable to use any base that would itself introduce calcium ions, such as Ca(OH)$_2$, or other divalent metal ions capable of complexing with the hydrocolloid to be added. Preferred bases include sodium hydroxide (NaOH) potassium hydroxide (KOH), ammonia, sodium carbonate (Na$_2$CO$_3$), urea, guanine, monovalent metal oxides, and organic amines such as hexamethylene tetramine.

The pH raise enables the equilibrium such $Ca^{2+} + H_2PO_4^- \rightarrow CaHPO_4 + H^+$ to shift to the right-hand side, by capturing protons. As a result, more free calcium ions will be captured as calcium phosphate.

In a further aspect, the invention presents a fibrous composition comprising casein and a hydrocolloid, preferably alginate, obtainable by a process as described hereinbefore. Said composition can be described generally as comprising alginate fibres that enclose casein, and any other components enclosed from the casein containing milk-based liquid. The composition deviates from known compositions by comprising at most 0.1 wt.% and more preferably no added emulsifying salts. The composition accordingly is distinguished from known compositions comprising alginate-based fibres and casein as a protein. E.g., the compositions made from curd, such as provided in accordance with the aforementioned WO 03/061400, generally comprise 0.6 wt.% to 1 wt. % of emulsifying salts. Types of emulsifying salts are known to the skilled person. These typically include phosphates and citrates, such as sodium hexametaphosphate.

Preferably, the composition is characterized by not containing added salts, particularly by not containing any emulsifying salts.

The fibrous composition resulting from the process of the invention, is suitable as a meat replacement. It is generally not itself a final product. Rather, it suitably serves as a food intermediate to which, as desired, further food ingredients can be added.

If desired, edible components can be added prior to the composition prior to the formation of the fibrous product. Such components can be, e.g., a thickening agent, a filler, or an additional source of fibres. In interesting embodiment, cereal fibres are added such as oat fibres, wheat fibres, corn fibres, and the like.

Further, if desired, additional food ingredients not affecting the fibre-forming capability of the homogenous mass can be added at any stage prior to the step of fibre formation. This particularly refers to seasoning, such as by adding salt and/or spices and/or herbs.

The fibrous composition is suitable to serve as a protein-rich structuring agent in food. The fibres can be provided with spices, aroma's, and other edible and/or nutritional ingredients. The fibrous composition, with any added ingredients, will be formed into a dough, generally together with a binder such as methyl cellulose, chicken egg-white, locust bean gum, carrageenan, or other such edible thickeners familiar to the skilled person. Th resulting dough can be shaped as desired, e.g. recognizable as a burger, a schnitzel, smaller pieces such as nuggets or fingers, and other varieties. Before use, the shaped dough generally needs to be heated to a temperature in a range of from 60°C to 80°C, preferably at least 70°C (as this has a pasteurizing effect) . The resulting product is suitable to be prepared by heating techniques such as frying, baking, or deep-frying.

Further, it can be desirable to provide the fibrous composition, before, during or after any cutting and/or shaping step, with one or more outside layers. Such outside layers can typically serve to form a crust after frying the resulting composition. This can be, e.g., a batter or a breading. Breading (also known as crumbing) is a dry grain-derived food coating for a piece of food, usually made from bread crumbs or a breading mixture with seasonings. Breading mixtures can be made, e.g., of breadcrumb, flour, cornmeal, and seasoning that the item to be breaded is dredged in before cooking. In an embodiment, the fibrous composition is first moistened, such as with buttermilk, raw egg, egg wash or other liquid, before breading.

In sum, a process is disclosed for the preparation of a fibrous structure, suitable as a meat replacement. The fibrous structure is formed from a milk-based liquid by precipitation of a hydrocolloid with a divalent salt such as calcium chloride. The milk-based fluid is a retentate from microfiltration.

The invention will hereinafter be further illustrated with reference to the following, non-limiting examples.

**Example 1**

Skimmed goat milk is subjected to microfiltration (using a ceramic membrane of pore size 0.1 $\mu$m). The retentate thereby obtained is used in this example.

To 300 mL of said retentate an amount of 2 g of a 10 wt.% aqueous solution of emulsifying salt [sodium hexametaphosphate) is added. The MF retentate is heated to 80°C. Subsequently 200 mL of a 4 wt.% aqueous solution of alginate (Vivapur® FD 175 ex Rettenmaier) is added, with stirring.

To the resulting composition 180 mL of a 4 wt.% aqueous solution of calcium chloride is slowly added, followed by gentle stirring. This results in the formation of a meat-like fibrous structure, comprising precipitated alginate which encapsulates non-soluble components from the composition.

The fibres are evaluated with reference to length, weight, and quality. It will be understood that, generally, fibres are formed of different lengths. Fibre length in the present Examples is given as a fibre length number, determined by visual inspection, ranging from 1 to 10. A fibre length number of 1 indicates very short fibres (maximally 2-3 mm), a fibre length number of 10 indicates a large majority of long fibres, up to about 10 cm length.

Quality is determined by visual and manual inspection and is rated on a scale from 0 to 10. Thereby 0 indicates a bad quality (short, soft, mushy) and 10 indicates an excellent quality (long, firm, juicy).

The quality of the process is checked with reference to the loss of whey after formation of the fibrous product. This is determined by the amount of dry matter solids, as a percentage of total dry matter solids, that is lost with process water. A lower loss generally indicates a better process, particularly with a better yield of casein milk components incorporated into the fibres.

The results are as follows:

- Fibre weight 378 g;
- Fibre length number: 8
- Fibre quality: 9
- Whey loss: 13 wt.%.

This reflects the production of a highly suitable fibrous composition. This product can be directly processed in food products, or it can be frozen and stored for later usage.

## Example 2

The experiment of Example 1 is repeated with different amounts of emulsifying salts. By way of comparison, the same process is followed starting from curd. The curd is obtained by subjecting semi-skimmed bovine milk to coagulation by the addition of rennet in a standard Gouda cheese-making process, involving the addition of 0.5 mg of 33% $CaCl_2$ solution per litre of milk. As with the MF retentate, 300 mL of curd is employed in each experimental run.

The results are depicted in Table 1 below. As can be seen, when using MF retentate fibres are obtained of good weight, length and quality, when applying a limited amount of emulsifying salts. Also without emulsifying salts, the use of MF retentate allows the formation of a fibrous composition. In the event of employing curd as a starting material, the required amounts of emulsifying salt are much higher, and the overall fibre quality of the MF retentate-based compositions is not achieved.

Table 1

| Liquid | Amount of emulsifying salt solution | Fibre weight (g) | Fibre length number | Fibre quality | Whey loss (wt.%) |
|---|---|---|---|---|---|
| MF retentate | 0 | 332 | 6 | 6 | 17 |
| MF retentate | 1 | 373 | 7 | 8 | 13 |
| MF retentate | 2 | 378 | 8 | 9 | 13 |
| MF retentate | 4 | 387 | 9 | 9 | 12 |
| MF retentate | 8 | 407 | 9 | 9 | 9 |
| Curd | 0 | 275 | 6 | 2 | 13 |
| Curd | 4 | 255 | 6 | 2 | 13 |
| Curd | 8 | 245 | 6 | 3 | 14 |
| Curd | 16 | 283 | 6 | 7 | 12 |
| Curd | 32 | 297 | 8 | 8 | 12 |

## Example 3

Ingredients:

casein milk obtained by subjecting skimmed goat milk to microfiltration (using a ceramic membrane of pore size 0.1 $\mu$m). The casein milk contains 0.2 wt.% fat, 12.25 wt.% protein and 4.1 wt.% lactose. The dry matter solids content of the casein milk is 17.7 wt.%.;
Alginate: Vivapur® FD175 ex Rettenmaier;
Calcium chloride 4 wt.% aqueous solution;
Sodium hydroxide 10 wt.% aqueous solution.

To 300g of casein milk, sodium hydroxide is added dropwise until a pH of the casein milk is 7.5. The resulting casein milk of pH 7.5 is heated for 10 minutes until the temperature of the casein milk is 80°C. To the heated milk an amount of 200 g of a 4 wt.% aqueous solution of the alginate is added with stirring so as to obtain a viscous paste.

To the viscous paste 120 ml. of the calcium chloride solution is added. Upon gentle stirring, the alginate forms a fibrous substance with the non-soluble substances from the casein milk. The fibrous substance is isolated and washed with water. Optionally, a small amount of citric acid is added to the washing water. So as to have a 1 wt.% citric acid solution as a washing fluid.

The resulting product can be directly processed in food products, or it can be frozen and stored for later usage.

## Example 4

Ingredients:

skimmed bovine casein milk powder (obtained from subjecting skimmed bovine milk to microfiltration followed by evaporation). The casein milk powder contains 1 wt.% fat, 67 wt.% protein and 22 wt.% lactose. The dry matter solids content of the casein milk powder 99.6 wt.%.;

Cream obtained from bovine milk, containing 40 wt.% of fat, 2.15 wt.% of protein, and having a dry matter solids content of 44.5 wt.%;

Alginate: Vivapur® FD175 ex Rettenmaier;

Calcium chloride 4 wt.% aqueous solution;

4 g of oat fibre Vitacel® HF 600 ex Rettenmaier.

To 300 g of warm water (45°C), 60 g of casein milk powder is added. Subsequently, 50 g of cream and 6 g of oat fibre are added. The resulting reconstituted casein milk is heated for 10 minutes until the temperature of the casein milk is 80°C. To the heated milk, 200 g of a 4 wt.% aqueous solution of the alginate is added with stirring, so as to obtain a viscous paste.

To the viscous paste 120 ml. of the calcium chloride solution is added. Upon gentle stirring, the alginate forms a fibrous substance with the non-soluble substances from the casein milk. The fibrous substance is isolated and washed as in Example 1.

**Example 5**

Ingredients and procedure are as in Example 2, except that the reconstituted casein milk is heated until a temperature of 85°C is reached and that in three runs the pH is varied. The results are evaluated with reference to the fibre weight, length, and quality, as a function of pH. The lowest pH value in the table is without addition of sodium hydroxide.

The results are depicted in Table 2 below.

Table 2

| pH | Fibre weight (g) | Fibre length number | Fibre quality | Whey loss (wt.%) |
|------|------|------|------|------|
| 6.59 | 274 | 3 | 2 | 27 |
| 7.07 | 274 | 6 | 6 | 22 |
| 7.65 | 261 | 7 | 8 | 22 |

As can be seen, without pH raise, in all runs fibres are formed, but the fibres without pH raise are short and of sub-optimal quality. At pH >7 optimal fibre lengths and weights are obtained. In terms of both fibre weight and process quality, the results are outperformed by those obtained with casein milk obtained from a microfiltration process.

**Example 6**

Skimmed goat milk is subjected to microfiltration (using a ceramic membrane of pore size 0.1 $\mu$m). The retentate thereby obtained is used in this example.

The MF retentate is heated to 45°C or 80°C. Subsequently, to 300 mL of said retentate, varying amounts are added, with stirring, of a 4 wt.% aqueous solution of alginate (Vivapur® ex Rettenmaier).

To the resulting composition 180 mL of a 4 wt.% aqueous solution of calcium chloride is slowly added, followed by gentle stirring. This results in the formation of a meat-like fibrous structure, comprising precipitated alginate which encapsulates non-soluble components from the composition. The fibres are evaluated with reference to length, weight, and quality as in Example 1.

The results are depicted in Table 3 below. As can be seen, without adding emulsifying salts, the use of an excess of alginate allows suitable fibre formation from a casein milk obtained as an MF retentate. Increasing the temperature of the retentate results in a better quality of the product and process, and allows using a lower amount of excess alginate.

Table 3

| Temperature (°C) | Amount of alginate solution (mL) | Fibre weight (g) | Fibre length number | Fibre quality | Whey loss (wt. %) |
|------|------|------|------|------|------|
| 45 | 100 | 166 | 1 | 0 | 13 |
| 45 | 200 | 358 | 0 | 0 | 13 |
| 45 | 300 | 750 | 0 | 0 | 9 |

(continued)

| Temperature (°C) | Amount of alginate solution (mL) | Fibre weight (g) | Fibre length number | Fibre quality | Whey loss (wt. %) |
|---|---|---|---|---|---|
| 45 | 400 | 577 | 10 | 5 | 12 |
| 45 | 500 |  | 10 | 5 |  |
| 80 | 100 | 245 | 3 | 4 | 15 |
| 80 | 200 | 331 | 6 | 7 | 17 |
| 80 | 300 | 487 | 10 | 6 | 13 |
| 80 | 400 | 620 | 10 | 5 | 11 |

**Example 7**:

Ingredients:

casein milk as in Example 1;
4g of oat fibre;
9g of alginate: DMB (alginate ex FMC Biopolymer) or Rettenmaier Vivapur® RD175).
200 mL of water to dissolve alginate;
180g of calcium chloride 4 wt.% aqueous solution;
10g of 10% solution of emulsifying salt (sodium hexametaphosphate).

Tests are run with making fibrous compositions generally as in Example 1. The pH is not changed (no addition of base, pH about 6.75), no emulsifying salts are added. The following parameters are varied:

(A) Alginate DMB :
(B) Alginate Vivapur®FD 175;

(1) heating to 60°C (heating at 1000W for 1 minute and 20 seconds);
(2) heating to 85°C (heating at 1000W for 2 minute and 10 seconds);

Batches of the casein milk are heated to 60°C or 85°C. To 300 mL heated casein milk, an varying amount of a 4 wt.% aqueous solution of either of the alginates is added with stirring so as to obtain a viscous paste. To the viscous paste 180 ml. of the calcium chloride solution is added. Upon gentle stirring, the alginate forms a fibrous substance with the non-soluble substances from the casein milk. The results are depicted in Table 4 below.

Table 4

| Alginate | Temperature (°C) | Fibre weight (g) | Fibre length number | Fibre quality | Whey loss (wt.%) |
|---|---|---|---|---|---|
| (A) | 60 | 315 | 7 | 5 | 33 |
| (B) | 60 | 324 | 7 | 5 | 34 |
| (A) | 85 | 375 | 9 | 7 | 18 |
| (B) | 85 | 324 | 8 | 7 | 22 |

As can be seen, in the event that the casein milk is heated to 60°C, fibres can be formed without increasing pH and without adding emulsifying salts. Whey loss is relatively high, and the fibres are relatively short. Improved fibres are obtained, and at a much lower whey loss, in the event of heating the casein milk to 85°C.

Example 8

Ingredients:

- Fibrous product obtained in accordance with Example 1;
- Chicken aroma
- Chicken egg white
- Methyl cellulose
- Potassium lactate Purasal® HiPure P
- Batter (obtained from wheat flour)
- Bread crumbs

To 1000 g of fibrous product, 25 g of chicken aroma is added. As a binder, 25 g of chicken egg white and 10 g of methyl cellulose are added. The resulting composition is kneaded at a temperature of between -2°C and 4°C, so as to form a dough. An amount of 20 g of potassium lactate is added as a preservative.

The dough is shaped to form schnitzels of about 100 g each. The shaped schnitzel is provided with a layer of batter and then embedded in a layer of bread crumbs. The resulting product is deep-fried for 1 minute at 180°C. The resulting end-product, which is a meat replacement resembling chicken schnitzel, can be frozen and stored, or can be directly prepared for consumption by frying.

Example 9

Ingredients:

- Reconstituted milk obtained from powdered goat milk

  A goat milk powder obtained by evaporating and spray drying goat milk. The milk powder contains 32.1 wt.% fat, 26.8 wt.% protein, and 34.8 wt.% lactose. The milk powder has a dry matter solids content of 96 wt.%. The milk powder is dissolved in water in a ratio of 1 part by weight of the powder to 3 parts by weight of water. This results in a reconstituted milk having a protein content of 6.7 wt.%.

- Reconstituted casein milk obtained from powdered goat milk MF retentate

  A goat casein milk powder is obtained from subjecting goat milk to microfiltration (MF), and subjecting the retentate thereof to evaporation and spray drying. The resulting powdered MF retentate contains 43.4 wt.% fat, 33.65 wt.% protein and 12.5 wt.% lactose. The powdered MF retentate has a dry matter solids content of 95 wt.%. The powdered MF retentate is dissolved in water in a ratio of 1 part by weight of the powder to 4 parts by weight of water. This results in a reconstituted MF retentate having a protein content of 6.7 wt.%.

- sodium hydroxide 8 wt.% aqueous solution.
- Rettenmaier Vivapur® FD175 alginate;
- (E) calcium chloride 4 wt.% aqueous solution

Reconstituted liquid (A) was divided into two batches, (A1) and (A2), of 200 mL each. Due to some inadvertent spillage, reconstituted liquid (B) was divided into a first batch (B1) of 200 mL and a second batch (B2) of 185 mL.

Batches (A1) and (B1) were heated to 35°C, and batches (A2) and (B2) to 85°. Sodium hydroxide (C) was added to batches (A2) and (B2) in order to raise pH.

To each of the batches (A) and (B), a 4% aqueous solution of (D) was added. The amount thereof was 200 mL in the event of batches (A1), (A2), and (B1), and 185 mL in the event of batch (B2). Subsequently, with careful stirring, calcium chloride (E) was added, in an amount of 150 mL for batches (A1), (A2), and (B1), and 135 mL for batch (B2).

The addition of calcium chloride resulted in the precipitation of alginate-containing fibrous solids. After precipitation, about 300 mL of water was added to the solids in order to remove excess of calcium chloride.

The fibrous solids were isolated and subjected to evaluation of fibre length, weight, and the percentage loss of dry matter solids (whey loss). The results are depicted in Table 5 below, with reference to fibre yield (grams of fibrous solids per 300 g of liquid, fibre length number, and whey loss.

Table 5

| | (A1) | (A2) | (B1) | (B2) |
|---|---|---|---|---|
| Fibre yield | 281 | 309 | 278 | 298 |
| Fibre length number | 3 | 7 | 7 | 8 |
| Whey loss (wt.%) | 25.8 | 18.3 | 13.9 | 10.0 |

As can be seen, batch (A1), obtained from milk powder without heating and pH increase, resulted in short fibres, not suitable for use as a meat replacement. Batch (A2), obtained from milk powder with heating and pH increase, resulted in fibres of adequate length. Batch (B1), obtained from MF retentate without heating and pH increase, resulted in fibres of similar adequate length as batch (A2) with heating and pH increase. Finally, batch (B2), obtained from MF retentate with heating and pH increase, resulted in fibres of good length.

Further, it can be seen that the process quality, in terms of whey loss, is markedly better for the batches (B) obtained from MF retentate. Further, the process quality improves with heating and pH increase of the batches.

**Example 10**

Ingredients:

A milk protein retentate obtained by subjecting skimmed goat milk to ultrafiltration. The UF retentate contains 0.2 wt.% fat, 10 wt.% protein and 4.1 wt.% lactose. The dry matter solids content of the UF retentate is 15.5 wt.%.;
Alginate: Vivapur® FD175 ex Rettenmaier;
Calcium chloride 4 wt.% aqueous solution;
Sodium hydroxide 10 wt.% aqueous solution.

To 300g of UF retentate, sodium hydroxide is added dropwise until the pH of the UF retentate is 7.6. The resulting casein milk of pH 7.6 is heated for 15 minutes until the temperature of the retentate is 85°C. To the heated milk an amount of 200 g of a 4 wt.% aqueous solution of the alginate is added with stirring so as to obtain a viscous paste.

To the viscous paste 120 ml. of the calcium chloride solution is added. Upon gentle stirring, the alginate forms a fibrous substance with the non-soluble substances from the casein milk. The fibrous substance is isolated and washed with water. Optionally, a small amount of citric acid is added to the washing water. So as to have a 1 wt.% citric acid solution as a washing fluid.

The resulting product can be directly processed in food products, or it can be frozen and stored for later usage.

**Example 11**

Ingredients:

skimmed bovine milk protein powder (obtained from subjecting skimmed bovine milk to ultrafiltration followed by evaporation). The UF milk powder contains 1.2 wt.% fat, 64 wt.% protein and 26 wt.% lactose. The dry matter solids content of the UF milk powder is 99.6 wt.%.;
Cream obtained from bovine milk, containing 40 wt.% of fat, 2.15 wt.% of protein, and having a dry matter solids content of 44.5 wt.%;
Alginate: Vivapur® FD175 ex Rettenmaier;
Calcium chloride 4 wt.% aqueous solution;
Sodium hydroxide 10 wt.% aqueous solution.
Oat fibre Vitacel® HF 600 ex Rettenmaier (6 g).

To 300 g of warm water (45°C), 60 g of milk protein powder is added. Subsequently, 50 g of cream and 6 g of oat fibre are added. The resulting reconstituted milk protein liquid is heated for 8 minutes until the temperature of the casein milk is 75°C. To the heated milk, 200 g of a 4 wt.% aqueous solution of the alginate is added with stirring, so as to obtain a viscous paste.

To the viscous paste 120 ml. of the calcium chloride solution is added. Upon gentle stirring, the alginate forms a fibrous substance with the non-soluble substances from the casein milk. The fibrous substance is isolated and washed with water.

**Claims**

1. A process for the preparation of a fibrous composition comprising:

   (i) providing a casein-containing milk-based liquid;
   (ii) subjecting said liquid to a calcium ions-binding treatment, thereby forming a free calcium ions-depleted liquid;
   (iii) adding to the free calcium ions-depleted liquid a hydrocolloid capable of precipitating with metal cations, thereby forming a fibre-generation liquid mass;
   (iv) contacting the fibre-generation liquid mass with an aqueous solution comprising at least divalent metal cations so as to form fibres,

   wherein the casein-containing milk-based liquid is a micellar casein concentrate.

2. A process according to claim 1, wherein the casein-concentrate is selected from the group consisting of a retentate obtained by subjecting milk to ultrafiltration, a retentate obtained by subjecting milk to microfiltration, and mixtures thereof.

3. A process according to claim 2, wherein the casein-containing milk-based liquid is the retentate as obtained, or a liquid obtained by reconstituting a dried form of the retentate in water.

4. A process according to any one of the preceding claims, wherein the hydrocolloid is an alginate.

5. A process according to any one of the preceding claims, wherein the at least divalent metal cations are calcium ions.

6. A process according to any one of the preceding claims wherein the calcium ions-binding treatment comprises adding an emulsifying salt, such as a phosphate.

7. A process according to any one of the preceding claims, wherein the calcium ions-binding treatment comprises increasing the temperature of the casein-containing milk-based liquid to at least 60°C, thereby enabling native milk phosphate to capture free calcium ions.

8. A process according to claim 7, wherein the treatment comprises increasing the temperature of the liquid to 65°C to 95°C.

9. A process according to claim 8, wherein the treatment comprises increasing the temperature to 80°C to 90°C.

10. A process according to any one of the claims 7 to 9,
    wherein the treatment comprises increasing the pH of the liquid to a value of at least 6.8.

11. A process according to claim 10, wherein the treatment comprises increasing the pH to 7.0 to 8.0, such as 7.2 to 7.4.

12. A fibrous composition obtainable by a process according to any one of the claims 7 to 10, wherein the composition comprises at most 0.1 wt.% added emulsifying salts.

13. A composition according to claim 12, wherein the composition comprises no added emulsifying salts.

14. A food product comprising the composition of claim 12 or 13, and one or more additional food ingredients.

15. A food product according to claim 14, wherein the additional food ingredients comprise an outside layer such as a breading.

**Patentansprüche**

1.  Verfahren zur Herstellung einer faserigen Zusammensetzung, umfassend:

    (i) Bereitstellen einer kaseinhaltigen Flüssigkeit auf Milchbasis;
    (ii) Unterziehen der Flüssigkeit einer Calciumionen-bindenden Behandlung, wodurch eine an freien Calciumionen verringerte Flüssigkeit gebildet wird;
    (iii) Zugeben eines Hydrokolloids, das geeignet ist, mit Metallkationen zu präzipitieren, zu der an freien Calciumionen verringerten Flüssigkeit, wodurch eine faserbildende flüssige Masse gebildet wird;
    (iv) Inkontaktbringen der faserbildenden flüssigen Masse mit einer wässrigen Lösung, umfassend mindestens zweiwertige Metallkationen, um so Fasern zu bilden,

    wobei die kaseinhaltige Flüssigkeit auf Milchbasis ein mizellares Kaseinkonzentrat ist.

2.  Verfahren nach Anspruch 1, wobei das Kaseinkonzentrat ausgewählt ist aus der Gruppe bestehend aus einem Retentat, erhalten durch Unterziehen von Milch einer Ultrafiltration, einem Retentat, erhalten durch Unterziehen von Milch einer Mikrofiltration, und Gemischen davon.

3.  Verfahren nach Anspruch 2, wobei die kaseinhaltige Flüssigkeit auf Milchbasis das erhaltene Retentat oder eine Flüssigkeit ist, erhalten durch Rekonstituieren einer getrockneten Form des Retentats in Wasser.

4.  Verfahren nach einem der vorhergehenden Ansprüche, wobei das Hydrokolloid ein Alginat ist.

5.  Verfahren nach einem der vorhergehenden Ansprüche, wobei die mindestens zweiwertigen Metallkationen Calciumionen sind.

6.  Verfahren nach einem der vorhergehenden Ansprüche, wobei die Calciumionen-bindende Behandlung Zugeben eines emulgierenden Salzes, wie z. B. eines Phosphats, umfasst.

7.  Verfahren nach einem der vorhergehenden Ansprüche, wobei die Calciumionen-bindende Behandlung Erhöhen der Temperatur der kaseinhaltigen Flüssigkeit auf Milchbasis auf mindestens 60°C umfasst, wodurch dem nativen Milchphosphat ermöglicht wird, freie Calciumionen einzufangen.

8.  Verfahren nach Anspruch 7, wobei die Behandlung Erhöhen der Temperatur der Flüssigkeit auf 65°C bis 95°C umfasst.

9.  Verfahren nach Anspruch 8, wobei die Behandlung Erhöhen der Temperatur auf 80°C bis 90°C umfasst.

10. Verfahren nach einem der Ansprüche 7 bis 9, wobei die Behandlung Erhöhen des pH-Wertes der Flüssigkeit auf einen Wert von mindestens 6,8 umfasst.

11. Verfahren nach Anspruch 10, wobei die Behandlung Erhöhen des pH-Wertes auf 7,0 bis 8,0, wie z.B. 7,2 bis 7,4, umfasst.

12. Faserige Zusammensetzung, erhältlich durch ein Verfahren nach einem der Ansprüche 7 bis 10, wobei die Zusammensetzung höchstens 0,1 Gew.-% zugesetzte emulgierende Salze umfasst.

13. Zusammensetzung nach Anspruch 12, wobei die Zusammensetzung keine zugesetzten emulgierenden Salze umfasst.

14. Lebensmittelprodukt, umfassend die Zusammensetzung nach Anspruch 12 oder 13 und eine oder mehrere zusätzliche Lebensmittelzutaten.

15. Lebensmittelprodukt nach Anspruch 14, wobei die zusätzlichen Lebensmittelzutaten eine äußere Schicht, wie z. B. eine Panierung, umfassen.

**Revendications**

1. Un procédé de préparation d'une composition fibreuse comprenant :

    (i) la fourniture d'un liquide à base de lait contenant de la caséine ;
    (ii) la soumission dudit liquide à un traitement de liaison avec les ions calcium, formant ainsi un liquide appauvri en ions calcium libres ;
    (iii) l'ajout au liquide appauvri en ions calcium libres d'un hydrocolloïde capable de précipiter avec des cations métalliques, formant ainsi une masse liquide génératrice de fibres ;
    (iv) la mise en contact de la masse liquide génératrice de fibres avec une solution aqueuse comprenant au moins des cations métalliques divalents de manière à former des fibres, le liquide à base de lait contenant de la caséine étant un concentré de caséine micellaire.

2. Un procédé selon la revendication 1, dans lequel le concentré de caséine est choisi dans le groupe constitué d'un rétentat obtenu en soumettant du lait à une ultrafiltration, d'un rétentat obtenu en soumettant du lait à une microfiltration, et de mélanges de ceux-ci.

3. Un procédé selon la revendication 2, dans lequel le liquide à base de lait contenant de la caséine est le rétentat tel qu'obtenu, ou un liquide obtenu par reconstitution dans de l'eau d'une forme séchée du rétentat.

4. Un procédé selon l'une quelconque des revendications précédentes, dans lequel l'hydrocolloïde est un alginate.

5. Un procédé selon l'une quelconque des revendications précédentes, dans lequel les cations métalliques au moins divalents sont des ions calcium.

6. Un procédé selon l'une quelconque des revendications précédentes, dans lequel le traitement de liaison des ions calcium comprend l'ajout d'un sel émulsifiant, tel qu'un phosphate.

7. Un procédé selon l'une quelconque des revendications précédentes, dans lequel le traitement de liaison des ions calcium comprend l'augmentation de la température du liquide à base de lait contenant de la caséine à au moins 60°C, permettant ainsi au phosphate de lait natif de capturer les ions calcium libres.

8. Un procédé selon la revendication 7, dans lequel le traitement comprend l'augmentation de la température du liquide entre 65°C et 95°C.

9. Un procédé selon la revendication 8, dans lequel le traitement comprend l'augmentation de la température entre 80°C et 90°C.

10. Un procédé selon l'une quelconque des revendications 7 à 9, dans lequel le traitement comprend l'augmentation du pH du liquide à une valeur d'au moins 6,8.

11. Un procédé selon la revendication 10, dans lequel le traitement comprend l'augmentation du pH entre 7,0 et 8,0, par exemple entre 7,2 et 7,4.

12. Une composition fibreuse pouvant être obtenue par un procédé selon l'une quelconque des revendications 7 à 10, dans laquelle la composition comprend au plus 0,1 % en poids de sels émulsifiants ajoutés.

13. Une composition selon la revendication 12, dans laquelle la composition ne comprend aucun sel émulsifiant ajouté.

14. Un produit alimentaire comprenant la composition selon la revendication 12 ou 13, et un ou plusieurs ingrédients alimentaires supplémentaires.

15. Un produit alimentaire selon la revendication 14, dans lequel les ingrédients alimentaires supplémentaires comprennent une couche extérieure telle qu'une panure ou chapelure.

**REFERENCES CITED IN THE DESCRIPTION**

**Patent documents cited in the description**

- WO 03061400 A
- EP 1588626 A
- EP 1643850 A
- EP 1643851 A
- EP 1771085 A
- US 20150351427 A
- SE 375227
- US 2011171359 A
- EP 1759593 A
- AU 2008200828
- WO 2005004624 A
- WO 2005004623 A